Europäisches Patentamt

**European Patent Office**

**Office européen des brevets**

(19)

(11) Publication number: **0 058 735**
**A1**

# EUROPEAN PATENT APPLICATION

(21) Application number: **81101281.4**

(22) Date of filing: **23.02.81**

(51) Int. Cl.³: **A 22 C 11/00**

(43) Date of publication of application: **01.09.82**
**Bulletin 82/35**

(84) Designated Contracting States: **BE CH DE FR GB LI LU NL SE**

(71) Applicant: **Taddia, Franco, via Carpeggiani, 1, I-44042 Cento Ferrara (IT)**

(72) Inventor: **Taddia, Franco, via Carpeggiani, 1, I-44042 Cento Ferrara (IT)**

(74) Representative: **Sassatelli, Franco, inip - Information Network of Intellectual Properties Via Mazzini, 170, I-40139 Bologna (IT)**

(54) **Binding system for sausages to season with permanent pressure effect.**

(57) Binding system for sausages to season with permanentpressure effect using an elastic natrual latex thread (6) for alimentary use, covered on the outside with cotton threads (7) spirally
wrapped for containing sausages and meats in general by means of spiral wrapping in order to obtain the permanent pressing effect of the binding medium on the core therein contained, even after the contraction of volume occurred when seasoning.

The binding, including also the longitudinal stiff threads for completing the net scheme, permits binding forms with a perception of appearance quite analogous to the traditional ones.

EP 0 058 735 A1

- 1 -

BINDING SYSTEM FOR SAUSAGES TO SEASON WITH PERMANENT PRESSURE
EFFECT:

The invention refers to the use of a binding means for sausages
and meats in general, consisting essentially of an elastic core
in natural latex for alimentary use, outerly covered with cotton
thread plot, for containing sausages and meats in general with
permanent pressure effect by means of spiral wrapping, and to com
pletewith net binding by means of conventional longitudinal con
nections with stiff thread. In this way the double aim is reached
to exert  a permanent pressure effect on the stuff  contained,
which is useful for obtaining an efficient seasoning, and an acce
leration inthe executioni times, as well to carry out  a net binding with a visible perception quite analogous to the one of the
conventional type.The latex for alimentary use, moreover, avoids
inconveniences even when the bound core is directly cooked.

At present, the binding of sausages, even if different in forms,
substantially foresees a containing  net which, in the initial
phase, exerts a pressing action for containing the core. This
action is useful for avoiding particularly air infiltrations
which would damage seasoning and to favour softening of lean meats
through fusion andd dispersion of the fat parts. However, if efficacious in the preparation phase, the present bindings quickly
cease to exert  a pressing action on the core in seasoning since
this one progressively reduces its encumbrance sizes.  The invent
ion, through the core containing with spiral wrapping of elastic
thread,  enables the solution of the problem arising from the re- ducibleness of the contained core volume.

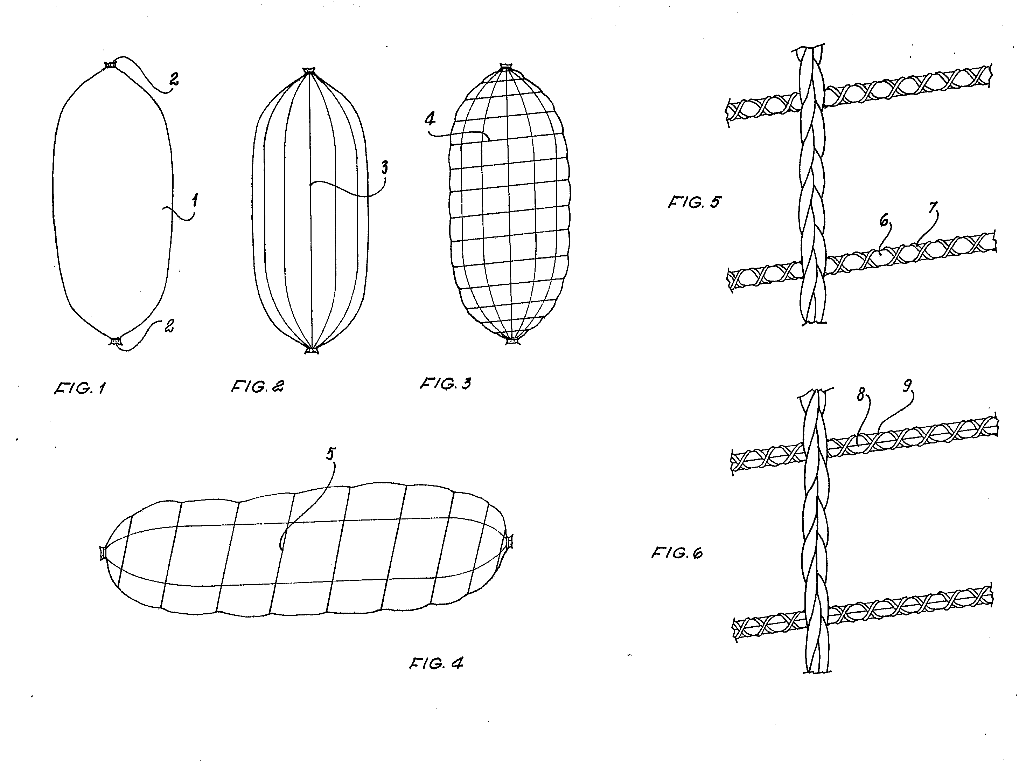

Some execution version are illustrated in a quite indicative way on the drawings of table 1 where fig. 1 is the view of a sausage of the "mortadella" type with envelope 1 and initial bindings 2. Fig. 2 shows the subsequent application of the stiff threads 3 with longitudinal disposition, and fig. 3 is the view of the completion of the net binding performed by means of the spiral wrapping of the thread 4 with inside elastic core. Fig. 4 is the view of the "salame" type sausage enwrapped with the same system but with elastic thread 5 in more spaced spirals. In the fig. 5 version the particular of the net scheme is illustrated which employs a binding medium with elastic thread core 6 extruded from natural latex and covered with cotton threads wounds in spiral form 7. Fig. 6 shows another net scheme using an elastic binding medium with double thread core extruded from natural latex and covered with cotton thread in spiral form 9.

In practice, the core conformation with elastic thread that of the wounding plot and the materials may vary according to the operative requirements. Particularly, the spiral wounding of the contained core allows to the elastic binding means to exert a permanent containing pressure effect uniformly distributed which operates as an accelerating means in the seasoning procedure, efficiently preserving the products from conservation inconveniences.

Claims:

1. Binding system for sausages to season with permenent pressure effect, characterized by the fact that for binding sausages and meats in general, it uses a thread with elastic core extruded from natural latex and covered with natural cotton threads in spiral form, with a view to exerting a containing effect uniformly distributed with pressure in a permanent way, by means of its spiral wounding on the containing core, useful for acting as an accelerating means in the seasoning process, preserving the products from ripening inconveniences.

2. Binding system for sausages to season with permanent pressure effect, as per the previous claim, characterized by the fact that the employ of the core coating of elastic thread with spiral cotton threads allows the preserve the elastic effect to the binding medium and a visible perception of conventional type thread apt to be used for obtaining the net binding with a visible perception analogous to the traditional ones.

3. Binging system for sausages to season with permanent pressure effect, as per the previous claims, characterized by the fact that the use of an elastic core extruded from natural latex permits the direct use of the bound product when cooking excluding inconveniences.

4. Binding system for sausages to season with permanent pressure effect, according to the above claims, characterized by the fact that, in other version, the spiral wrapping employs elastic thread 5 foreseen in spirals more spaced out.

6. Binding system for sausages to season with permanent pressure effect, as per the above claims, characterized by the fact that it employs a binding means with elastic thread core 6 extruded from natural lated and covered with cotton threads in spiral form 7.

7. Binding system for sausages to season with permanent pressure effect, according to the previous claims, characterized by the fact that it uses a binding means with double elastic thread core extruded from natural latex and covered with spiral cotton threads.

0058735

0058735

## DOCUMENTS CONSIDERED TO BE RELEVANT

| Category | Citation of document with indication, where appropriate, of relevant passages | Relevant to claim |
|---|---|---|
| X | DE - B - 1 210 709 (HÄMMERLE) <br> * column 2, line 38 - column 3, line 5 * | 1-3,6 |
| X | US - A - 3 178 910 (HÄMMERLE) <br> * column 3, lines 19-32 * | 1-3 |
| A | FR - A - 1 206 511 (RAYFLEX) <br> * page 1, right-hand column, paragraphs 2,3; abstract a * | 1 |
| A | GB - A - 1 207 030 (PAL) <br> * page 2, lines 26-30 * | 1 |
| A | NL - A - 72 02 003 (CHERIO) <br> * page 3, lines 20-23 * | 1 |

CLASSIFICATION OF THE APPLICATION (Int. Cl. 3)

A 22 C 11/00

TECHNICAL FIELDS SEARCHED (Int.Cl. 3)

A 22 C
B 65 D
A 23 B

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 26-05-1982 | DE LAMEILL |

EPO Form 1503.1 06.78